# EUROPEAN PATENT APPLICATION

(11) **EP 3 208 127 A1**
(43) Date of publication of application: **23.08.2017**
(21) Application number: 17156410.7
(22) Date of filing: 16.02.2017
(51) Int. Cl.: B60K 15/03

(54) **FUEL CELL VEHICLE**

(30) Priority: 19.02.2016 IT UA20161289
(71) Applicant: Vicario, Guido Francesco, 20129 Milano (IT)
(72) Inventor: Vicario, Guido Francesco, 20129 Milano (IT)
(74) Representative: Lunati & Mazzoni S.r.L.

(57) **Abstract**

A motor vehicle (1) is foreseen comprising at least one connector (31, 41) with matching devices (5) and the other connector (31, 41) with releasing devices (6), the releasing devices (6) are movably engaged to at least one connector (31, 41) and are suitable for being moved in opposition to contrasting devices (7), and they define an engagement phase, in which they are jointly engaged to the matching devices (5), and a disengagement phase, in which the releasing devices (6) act in opposition to the contrasting devices (7), the releasing devices (6) are suitable for moving automatically from the engagement phase to the disengagement phase when the connectors (31, 41) move from the non-operational configuration to the operational configuration and are suitable for moving from the engagement phase to the disengagement phase only by means of a command when the connectors (31, 41) move from the operational configuration to the non-operational configuration.

## Description

### FUEL CELL VEHICLE

The present invention relates to a fuel cell vehicle of the type specified in the preamble of the first claim.

As is known, most vehicles currently on the market comprise motor systems that principally run on petrol or diesel.

These motors allow the motor vehicles onto which they are fitted to move by completing thermal cycles, which convert mixtures of air and fuel into useful energy and exhaust substances.

The exhaust substances are known to contain, for example, carbon oxides, hydrocarbons and nitric oxide.

The known art described comprises several important inconveniences.

In particular, the listed substances are extremely harmful to the environment and, despite the recent trend to reduce these exhaust substances, the typology of motors does not allow us to have vehicles that are completely without harmful substances.

Today, however, the protection of the environment is of utmost importance and emissions of harmful substances or substances, which can have a negative impact on the climate, must be reduced to a minimum.

Consequently, in the last few years, electric vehicle manufacturers have been set up, pushing for a renewal of the transport systems. Toyota^{®} and Tesla^{®} are examples in this regard.

While the former has dealt principally with adopting hybrid-type solutions, the second car manufacturer has devoted itself exclusively to the production of electric models.

The above solutions allow harmful emissions in the atmosphere to be reduced or even abolished completely.

However, they also comprise several important disadvantages.

In particular, in Toyota^{®}'s case, the vehicles are not completely electric and consequently, when running on standard fuel, they still include harmful emissions. In Tesla^{®}'s case, the main problem lies in the intrinsic limits of the electric technology produced thus far in the field of electric motor vehicles.

In fact, the vehicles developed by them offer acceptable performance when compared to conventional motor vehicles. However, their runtimes are extremely limited with slow and costly means of energy supplies.

At present, with a fully-charged battery, the higher performing electric vehicles can reach maximum runtimes of 160 km.

As regards the battery recharging methods, systems are substantially foreseen comprising different types of recharging towers.

At present, supply towers for recharging 3.5 kW electric vehicles are common. These supply towers allow batteries to be recharged substantially in 8 hours. Another typology of tower currently available is 50 kW and allows 40% of the battery to be recharged in half an hour.

As is therefore evident, another inconvenience present in vehicles with electric type solutions comes from the time needed to recharge the energy system, in addition to the limited runtimes.

This consideration is aggravated by the fact that the electric energy used for recharging the batteries is often produced inside thermoelectric power plants, which, as we know, also involve emissions of polluting substances.

A further inconvenience is linked to the costs of managing and maintaining the plants, which, because of the way they have been designed thus far, can reach costs in the order of millions of euros.

In this situation, the technical task at the basis of the present invention is to design a motor vehicle substantially capable of overcoming at least part of the stated inconveniences.

Within the sphere of said technical task, an important aim of the invention is to obtain a motor vehicle that allows the polluting exhaust substances to be abolished and reduce the impact on the environment.

A further important aim of the invention is to realise a motor vehicle, which can guarantee an adequate runtime with battery recharging times that are as limited as possible.

In conclusion, another further important aim of the invention is to realise a motor vehicle that can be recharged independently of the previously described plants designed thus far, reducing not only the pollution caused by the generation of active energy inside the plants, but also their management and maintenance costs.

The technical task and specified aims are achieved with a motor vehicle as claimed in the accompanying drawing 1. Preferred embodiments are described in the dependent claims.

The characteristics and advantages of the invention are clarified below by a detailed description of a preferred embodiment of the invention, with reference to the accompanying drawings, wherein:
**Figure 1** shows the motor vehicle according to the invention;
**Figure 2** illustrates a functional diagram of the motor vehicle according to the invention;
**Figure 3** represents the connectors in an operational configuration;
**Figure 4** shows the connectors in a non-operational configuration; and
**Figure 5** is a plan of a territory comprising the energy supply system.

In this document, when measurements, values, shapes and geometrical references (such as perpendicularity and parallelism) are associated with words, such as "approximately" or other similar terms, for example "practically" or "substantially", they are to be understood as with the exception of errors of measurement or inaccuracies resulting from production and/or manufacturing errors and, above all, with the exception of a slight divergence from the value, measurement, shape or geometrical reference with which it is associated. For example, if said terms are associated with a value, they preferably indicate a divergence of no more than 10% of the same value.

Furthermore, when terms such as "first", "second", "upper", "lower", "principal" and "secondary" are used, they do not necessarily identify an order, a relationship priority or relative position, but they may simply be used to distinguish different components more clearly.

Unless otherwise indicated, the measurements and data reported in this text shall be considered as carried out in International Standard Atmosphere ICAO (ISO 2533).

With reference to the Figures, the motor vehicle according to the invention is globally indicated with number **1.**

The motor vehicle 1 is preferably a vehicle fitted with four wheels or three wheels and it is, therefore, for example a standard motor vehicle of a variable typology. For example, the motor vehicle can be a sports car, or a family car.

Alternatively, the motor vehicle can be a means of transport of a different type: for example, it can be a van or an articulated vehicle, like a bus or a lorry, or it can be a motorbike or a moped.

The motor vehicle 1 comprises a motor system **2.** This motor system 2 is suitable for transmitting movement to the wheels of the motor vehicle 1 and it is, therefore, connected to the wheels by transmission equipment known at the present state of the art, used on standard cars.

The motor system 2 preferably comprises a fuel cell **20** and an electric motor **21.** The electric motor 21 is a motor suitable for converting the input electrical energy into output mechanical energy. For example, it is an alternating current motor made up of one or more phases and it can be synchronous or asynchronous. Alternatively, the motor 21 can be with direct current.

It is operatively connected to any wheels of the motor vehicle 1 by means of the previously stated conventional transmission devices.

Alternatively, these wheels can be in-wheel motors, also known at the present state of the art.

Furthermore, it is preferably operatively connected to the fuel cell 20 from which it receives the electrical energy needed for operation.

The fuel cell 20 is a standard type of cell that is known at the present state of the art and it is, therefore, preferably suitable for supplying direct current to the electric motor 21.

In particular, the fuel cell 20 is preferably suitable for receiving hydrogen and producing energy recombining the hydrogen with oxygen.

For this reason, the motor system 2 could comprise auxiliary components **22.**

For example, an auxiliary component 22 may be foreseen between the fuel cell 20 and the electric motor 21 composed of an inverter suitable for converting the direct current signal into an alternating current signal.

In detail, the fuel cell 20 is substantially preferably made up of two porous plates defining the electrodes and comprising a catalysing layer on the inner surface. Said configuration is preferably suitable for generating energy by reverse electrolysis starting from a quantity of hydrogen entered into the cell 20, and it operates in reverse in relation to the direct electrolysis, which is, instead, one of the methods for obtaining hydrogen gas.

In particular, the electrode constituting the anode is suitable for freeing electrons from the hydrogen ions, the electrons therefore flow by means of a circuit, from the anode to the cathode and interact again with the hydrogen (H⁺) and oxygen ions freed from the anode.

A solid material layer or a liquid volume suitable for creating a permeable membrane only for the positive hydrogen ions is preferably set between the porous plates.

The catalysing layer can be made of platinum, gold, silver, palladium or ruthenium. This layer is preferably used for maintaining the triggering and the electrochemical reactions of the fuel cell 20 and it is useful, above all, for cells 20 at a low temperature.

The typologies of fuel cells 20 include fuel cells with alkaline electrolytes (A-FC), with a proton exchange polymer membrane (PEM-FC), direct methanol (DM-FC), phosphoric acid (PA-FC), molten carbonate (MC-FC) and solid oxide (SO-FC). The fuel cell 20 is preferably a proton exchange polymer membrane.

Therefore, the electrolyte is made up, for example, of a solid membrane in Naflon^{®}. The anode of the fuel cell 20 is preferably suitable for triggering a reaction of the type:

2H₂ → 4H⁺ + 4e⁻

where the Hs⁺ cross the membrane and reach the cathode immersed in oxygen. Thus, the electrons coming from the user preferably perform the reaction to the cathode given by:

O₂ + 4e⁻ + 4H⁺ → 2H₂O

producing hot water and nothing else.

The operating temperatures are preferably contained between 80-100°C, and the power supplied can vary between 1-250kW.

Additionally, the motor system 2 can comprise other auxiliary components 22. Besides the previously stated inverter, the auxiliary components 22 can comprise other electric batteries for supplying the electric motor 21 and other redundant systems for supplying and maintaining the motor system 2.

The motor vehicle 1 thus comprises at least one space 3.

The space 3 can be set in different parts of the motor vehicle 1; for example, it can be set at the front, or at the back or at the side, level with the positions occupied by standard openings for the vehicle's petrol.

The space 3 is preferably set in a part of the motor vehicle 1, which offers users easy access.

Moreover, the space 3 preferably consists of a cavity comprising an internal volume **30** and a first connector **31,** which is connected to the motor system 2 for the passage of fluid.

The internal volume 30 can be different shapes and is preferably smaller than a standard car tank.

Moreover, the internal volume 30 can be separated from the outside by means, for example, of a door similar to the door of a luggage compartment or other.

The first connector 31 is preferably connected to the fuel cell 20 for the passage of fluid. It can be directly connected to it, or it is preferably connected to it by opportune channels or tubes known at the current state of the art, suitable for channelling fluid into the fuel cell 20.

The first connector 31 is thus a mechanical device suitable for being coupled to another compatible connector so as to create a detachable engagement and it comprises at least one channel to allow the passage of fluid.

It preferably has a substantially hollow cylindrical shape to allow the insertion of another connector. However, it could have a hollow cylindrical shape suitable for being inserted inside another connector.

Consequently, the first connector 31 can be a male or a female type socket. Moreover, the first connector 31 therefore preferably defines a main axis **31a** and a main flat surface **31b.**

The main axis 31 a preferably corresponds substantially to the axis of the cylinder constituting the first connector, while the main flat surface 31 b is perpendicular to the main axis 31 a.

The space 3 is thus suitable for housing at least one tank **4,** inside its internal volume 30, however, the internal volume 30 could also allow the insertion of a plurality of tanks 4.

The tank 4 is, for example, a tank of a type known at the present state of the art. Thus, it preferably has a substantially conventional capsule shape compatible with the sizes defined by the internal volume 30 and it could comprise a handle so it is easy to move.

Moreover, the tank 4 defines a main volume **40** and comprises a second connector **41.**

The main volume 40 is preferably the space encompassed inside the tank 4 and it is suitable for containing fluid. This fluid can therefore be a gaseous or a liquid type of fluid.

The fluid contained inside the tank 4 is preferably hydrogen.

Moreover, the tank 4 defines the main volume 40 by means of walls preferably made of carbon fibre.

The second connector 41 is preferably suitable for being detachably engaged to the first connector 31.

Moreover, the second component 41 is, for example, a mechanical device suitable for being coupled to another compatible connector, in this case, the first connector 31, so as to create a detachable engagement and it also comprises at least one channel to allow the passage of fluid.

It preferably has a substantially hollow cylindrical shape to allow the insertion of another connector. However, it could have a hollow cylindrical shape suitable for being inserted inside another connector.

Consequently, the first connector 41 can be a male or a female type socket. Moreover, the first connector 41 therefore preferably defines a main axis **41a** and a main flat surface **41b.**

The main axis 41a preferably corresponds substantially to the axis of the cylinder constituting the first connector, while the main flat surface 41 b is perpendicular to the main axis 41 a.

Said connectors 31, 41 are preferably suitable for being coupled detachably.

In particular, the connectors 31, 41 are preferably suitable for making an engagement with quick release snap-on coupling.

The first connector 31 is preferably substantially suitable for containing and, if necessary, holding at least part of the second connector 41.

Therefore, the connectors 31, 41 preferably define an operational and a non-operational configuration.

In the non-operational configuration, the flat surfaces 31 b, 31 a are substantially not coplanar. Whereas, the axes can be aligned or not. For example, the connectors 31, 41 can be aligned and close together, but still not engaged. So, the flat surfaces 31b and 41 a are preferably coplanar only when the engagement is made between the connectors 31,41.

Whereas, in the operational configuration, the axes 31 a, 41 a are preferably substantially aligned and the flat surfaces 31 b, 41 b are coplanar.

At least one of the connectors 31, 41 preferably comprises matching devices **5** and the other connector 31, 41 comprises releasing devices **6.**

The releasing devices 6 are preferably movably engaged to the connector 31, 41 where they are incorporated. They are preferably incorporated inside the connector 31.

Moreover, for example, they are suitable for being moved in opposition to contrasting devices **7.**

The releasing devices 6 preferably consist of a slider suitable for being moved along a direction **6a.** This direction 6a is preferably parallel to the flat surfaces 31 b, 41 b when in operational configuration or, for example, to the main flat surface 31 b when in non-operational configuration.

Moreover, the contrasting devices 7 preferably consist of an elastic element suitable for reacting along the direction 6a.

They can be an elastomeric element, or a spring, or magnets with equal polarity suitable for generating a contrasting magnetic force when put together.

The releasing devices also comprise at least a first protrusion **60.**

In particular, the releasing devices 6 are preferably substantially made up of a mobile ring comprising a hole **61** aligned with the main axis 31 a, which is suitable for allowing the second connector 41 to be passed inside it.

The protrusion 60 is thus preferably set inside the hole 61 to create interference with the movement of the second connector 41 inside the hole 61.

The protrusion 60 preferably protrudes towards the main axis 31 a and is suitable for interfering with the second connector 41 along a first matching surface **60a** that is parallel to the direction 6a. This first matching surface 60a can be made with any obstacle, such as, for example, a tooth or a shoulder inside the releasing devices 6.

The matching devices 5 are preferably set on the outer surface of the second connector 41. In particular, the matching devices 5 are suitable for interacting with the releasing devices 6.

The matching devices 5 preferably comprise at least a second protrusion **50.** This second protrusion 50 is preferably made up of a ring protruding radially towards the outside in relation to the secondary axis 41 a and it substantially corresponds to a section increase of the second connector 41.

In particular, the second protrusion 50 is suitable for being engaged detachably to the first protrusion 60.

The protrusions 50, 60 are thus preferably suitable for preventing the mutual translation of the connectors 31, 41 along the axes 31 a, 41 a when the connectors 31, 41 are in operational configuration.

The protrusion 50 thus preferably defines a second matching surface **50a.**

The second matching surface 50a is preferably counter-shaped in relation to the first matching surface 60a. The matching surfaces 50a, 60a consequently interact jointly when the connectors 31, 41 are in operational configuration.

The matching surfaces 50a, 60a preferably only interact when attempting to move from the operational configuration to the non-operational configuration and the releasing devices have not been activated.

The protrusions 50, 60 are preferably suitable for allowing the transfer from the non-operational configuration to the operational configuration automatically. Their shapes, for example, are such as to move the releasing devices 6 when the connectors 31, 41 are moved along the axes 31 a, 41 a from the non-operational to the operational configuration.

Therefore, the releasing devices 6 and the matching devices 5 define a phase of engagement and disengagement.

In the engagement phase, the releasing devices 6 and the matching devices 5 are preferably engaged, while in the disengagement phase, the releasing devices 6 act in opposition to the contrasting devices 7. In this last phase, the releasing devices 6 and the matching devices 5 are consequently disengaged.

Moreover, the releasing devices 6 are suitable for moving automatically from the engagement phase to the disengagement phase when the connectors 31, 41 go from the non-operational configuration to the operational configuration.

Moreover, they are suitable for moving from the engagement phase to the disengagement phase, only by means of a command, when the connectors 31, 41 go from the operational configuration to the non-operational configuration. Additionally, the first connector 31 can comprise a first shutter **32.** The first shutter 32 is preferably suitable for allowing or preventing the passage of fluid inside the first connector 31.

Additionally, the second connector 41 can comprise a second shutter **42.** The second shutter 42 is preferably suitable for allowing or preventing the passage of fluid inside the second connector 32.

In particular, the shutters 32, 42 are preferably suitable for allowing the passage of fluid inside the connectors 31, 41 only when the connectors 31, 41 are in operational configuration.

Moreover, the shutters 32, 42 are preferably valves of the type chosen from non-return valves and control valves. They can thus act independently of each other or they can work together when the connectors 31, 41 are in operational configuration.

The shutters 32, 42 can therefore be activated on command, or they can be activated automatically when the connectors 31, 41 are in operational configuration.

For example, the connectors can comprise protruding engagement elements, which open the connection mechanically in the engaged position.

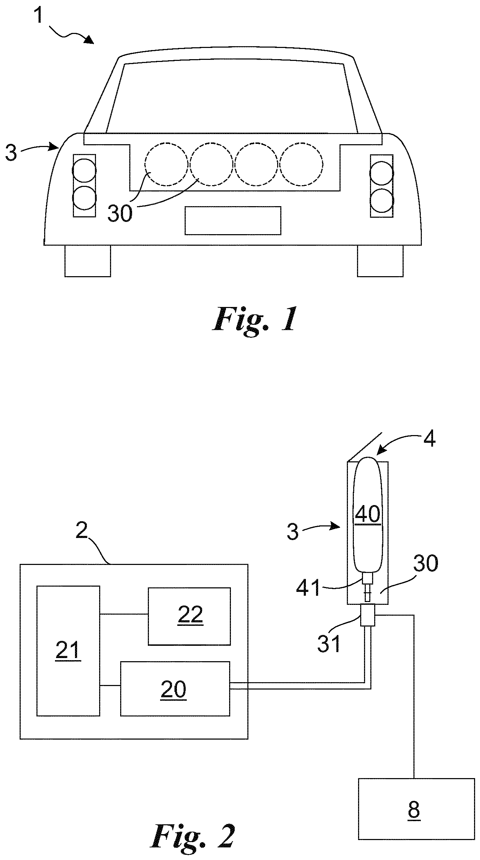

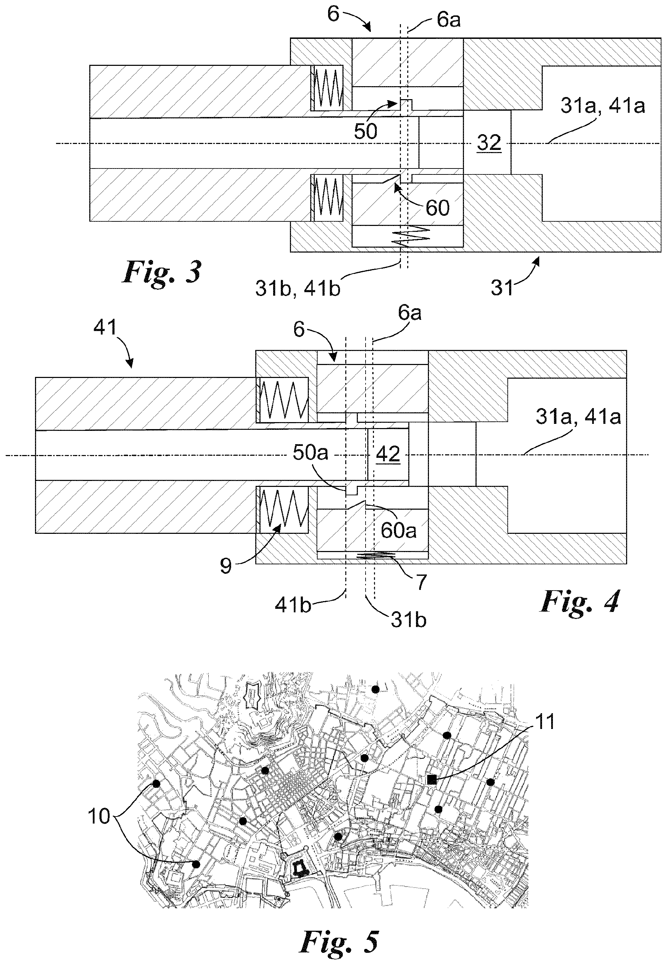

Similar connections are described, for example, in the patent US-B-7887102 between column 3 line 56 and column 10 line 33 and in the Figures 1-9, or in the patent application US-A-2016/169430 between paragraphs 44 and 153 and in the Figures 1-14.

The shutters 32, 42 are preferably operated by command devices **8.**

The command devices 8 are made up of commands of a known type comprising, for example, one or more buttons connected electrically to at least one actuator. The command devices 8 are therefore preferably set in the area of the motor vehicle 1 that constitutes the cabin and can be reached by the user when sitting in the driver's seat.

The command devices 8 are therefore electrically connected to at least one actuator. The actuator is preferably suitable for moving the releasing devices 6 along the direction 6a by the user in a controlled manner.

In conclusion, at least one of the connectors 31, 41 comprises an opposition element **9.**

The opposition element 9 is preferably incorporated in the first connector 31.

The opposition element 9 is preferably suitable for opposing the connectors 31, 41 along the axes 31 a, 41 a when they move from the non-operational configuration to the operational configuration.

In detail, the opposition element 9 opposes the coupling of the connectors 31, 41, so when the connectors 31, 41 reach the operational configuration and the protrusions 50, 60 make the engagement, the opposition element 9 preferably remains stressed.

The opposition element 9 is preferably an elastic element suitable for allowing the connectors 31, 41 to move automatically from the operational configuration to the non-operational configuration when the releasing devices 6 are moved, in other words when the releasing devices 6 and the matching devices 5 move from the engagement phase to the disengagement phase.

In conclusion, the motor vehicle 1 can comprise slots, positioned internally, suitable for containing auxiliary reserve tanks 4.

These slots can consist of cylinders that are compatible with the shapes and sizes of the tanks 4 and which are suitable for containing and supporting the tanks 4, at least partially. Moreover, inside, these cylinders can comprise sliding cylinders to facilitate the insertion of the tanks 4 and they can comprise a hooking device for the second connector 41 suitable for detachably engaging the tank 4, for example by interlocking.

The working of the motor vehicle 1 described previously in structural terms is as follows.

When the energy of the motor vehicle 1 is low, it is possible to replace the tank 4 with another tank 4 that is completely full of hydrogen. This can be carried out simply by activating the command devices 8 and quickly releasing the tank 4 in use from the first connector 31 of the space 3. At this point, it is possible to insert a new tank 4 into the space 3, allowing the second connector 41 to secure itself automatically to the first connector 31.

This mechanism allows the user to replace the tanks 4 easily, increasing the runtime of the motor vehicle 1 and reducing the recharging times of the motor vehicle compared to the vehicles known at the present state of the art.

Therefore, the motor vehicle 1 allows the creation of a new energy supply system. This energy supply system can be applied to an area.

For example, it can be used in a city, a region or even in greater areas.

Thus, the energy supply system preferably comprises the motor vehicle 1, a plurality of primary recharging stations **10** and a plurality of secondary recharging stations **11.**

The primary recharging stations 10 comprise at least one manual or automatic distributor, with a plurality of tanks 4 containing hydrogen. Therefore, the tanks 4 are used mainly for supplying the fuel cell 20.

Substantially, the primary recharging stations 10 are preferably deposits of tanks that do not require any particular technology, other than that needed to guarantee acceptable levels of safety.

Therefore, in detail, the primary recharging stations 10 preferably consist of fireproof walls, reinforced doors and at least one chimney on top to guarantee the safety of the system, also with regard to hydrogen leaks.

The automatic distributors preferably comprise at least one rack comprising metal grill walls and internal partitions with a honeycomb-like structure suitable for guaranteeing a correct division between the tanks 4 contained inside.

The secondary recharging stations 11 comprise at least one electric energy distributor of a known type that can be, for example, suitable for obtaining hydrogen in a gaseous state from rainwater.

Therefore, the motor vehicle 1 comprises at least one auxiliary element 22 consisting of an electric battery.

The energy supply system thus foresees that the motor vehicle 1 can quickly recharge the energy needed for circulation in the primary recharging stations 10. The secondary recharging stations 11 can be utilised when the user doesn't need the motor vehicle 1 and so the long recharging times foreseen at the present state of the art do not interfere with the normal use of the motor vehicles 1.

The invention comprises a new energy supply procedure.

The energy supply procedure comprises a first phase, in which the user inserts the tank 4 inside the space 3, a second phase, in which the hydrogen in the tank 4 is used by the fuel cell 20, a third phase, in which the user operates the command devices 8 to allow the connectors 31, 41 to go from the operational configuration to the non-operational configuration automatically when the motor vehicle 1 is stationary in the primary recharging station 10, and a fourth phase, in which the user removes the tank 4 and replaces it with another tank 4 contained in the distributor of the primary recharging station 10.

The motor vehicle 1 according to the invention gains important advantages.

In fact, the motor vehicle 1 allows a reduction in the polluting substances released into the atmosphere because, unlike with the other standard vehicles that run on petrol or other types of fuel, no emissions are involved in the processes, which only foresee the use of electric energy or hydrogen in fuel cells.

In fact, in the latter, energy is generated by transfer and not by combustion.

Moreover, another important advantage is given by the fact that compared to the electric vehicles known at the present state of the art, the motor vehicle 1 allows greater runtimes to be reached with short recharging times as they are solely defined by the recharging of the tanks 4 when the vehicle is being used.

In conclusion, the motor vehicle 1 offers a far cheaper energy supply system compared to those foreseen at the present state of the art for standard electric vehicles, thus reducing the pollution caused by the generation of active energy inside the current recharging plants, reducing the need for maintenance as the automatic distributors of the primary recharging stations are substantially containers, which are simple to make and maintain.

The invention is subject to variations that fall within the sphere of the inventive concept defined by the claims.

In this context, all of the details can be replaced by equivalent components and any materials, shapes and sizes may be used.

## Claims

1. Motor vehicle (1) comprising:
- a motor system (2) comprising at least one fuel cell (20),
- a space (3) defining an internal volume (30) and comprising a first connector (31) connected to said fuel cell (20) for the passage of fluid,
- at least one tank (4) defining a main volume (40) suitable for containing fluid and comprising a second connector (41) suitable for being detachably engaged to said first connector (31),
- said first connector (31) defining a main axis (31 a) and a main flat surface (31 b) that is perpendicular to said main axis (31 a),
- said second connector (41) defining a secondary axis (41 a) and a secondary flat surface (41 b) that is perpendicular to said secondary axis (41 a),
- said connectors (31, 41) defining
- a non-operational configuration wherein said flat surfaces (31 b, 41 b) are substantially not coplanar and
- an operational configuration wherein said axes (31 a, 41 a) are substantially aligned and said flat surfaces (41 b, 41 b) are coplanar,
said motor vehicle (1) being **characterised in that**
- at least one of the said connectors (31, 41) comprises matching devices (5) and the other of said connectors (31, 41) comprises releasing devices (6),
- said releasing devices (6) being movably engaged to at least one of said connectors (31, 41) and suitable for being moved in opposition to contrasting devices (7),
- said releasing devices (6) defining
- an engagement phase, wherein they are jointly engaged to said matching devices (5), and
- a disengagement phase, wherein said releasing devices (6) act in opposition to said contrasting devices (7),
- said releasing devices (6) being suitable for moving automatically from said engagement phase to said disengagement phase when said connectors (31, 41) go from said non-operational configuration to said operational configuration and being suitable for moving from said engagement phase to said disengagement phase only by means of a command when said connectors (31, 41) go from said operational configuration to said non-operational configuration.

2. Motor vehicle (1) according to claim 1, wherein said releasing devices (6) are made up of a slider suitable for moving along a direction (6a) that is parallel to said flat surfaces (31 b, 41 b) with said contrasting devices (7) comprising at least one elastic element suitable for acting along said direction (6a).

3. Motor vehicle (1) according to at least one previous claim, wherein said releasing devices (6) comprise at least a first protrusion (60) and said matching devices (5) comprise at least a second protrusion (50) suitable for being detachably engaged to said first protrusion (60), said protrusions (50, 60) preventing the joint movement along said axes (31 a, 41 a) of said connectors (31, 41) when said connectors (31, 41) are in operational configuration.

4. Motor vehicle (1) according to at least one previous claim, wherein said protrusions (50, 60) define two counter-shaped matching surfaces (50a, 60a), which are suitable for interacting jointly when said connectors (31, 41) are in operational configuration.

5. Motor vehicle (1) according to at least one previous claim, wherein said first connector (31) comprises at least a first shutter (32) suitable for allowing or preventing the passage of fluid inside said first connector (31) and said second connector (41) comprises at least a second shutter (42) suitable for allowing or preventing the passage of fluid inside said second connector (41),
- said shutters (32, 42) being suitable for allowing the passage of fluid only when said connectors (31, 41) are in operational configuration.

6. Motor vehicle (1) according to at least one previous claim, wherein said shutters (31, 32) are two valves of a known type chosen from two non-return valves or two control valves.

7. Motor vehicle (1) according to at least one previous claim, comprising command devices (8) that are electrically connected to an actuator, said actuator being suitable for moving said releasing devices (6) along said direction (6a) by a user in a controlled manner.

8. Motor vehicle (1) according to at least one previous claim, wherein at least one of the said connectors (31, 41) comprises an opposition element (9) suitable for opposing said connectors (31, 41) along said axes (31 a, 41 a) when moving from said non-operational configuration to said operational configuration, said opposition element (9) being an elastic element suitable for allowing said connectors (31, 41) to move automatically from said operational configuration to said non-operational configuration when said releasing devices 6 are moved.

9. Energy supply system applied to an area and comprising:
- the motor vehicle (1) of at least one previous claim comprising at least one auxiliary element (22) consisting of an electric battery,
- a plurality of primary recharging stations (10) comprising at least one distributor comprising a plurality of said tanks (4) containing hydrogen, and
- a plurality of secondary recharging stations (11) comprising at least one distributor of electric energy of a known type.

10. Energy supply procedure according to at least one previous claim, comprising:
- a first phase, wherein said user inserts said tank (4) into said space (3),
- a second phase, wherein said hydrogen contained in said tank (4) is used by said fuel cell (20),
- a third phase wherein said user operates said command devices (8) to allow said connectors (31, 41) to move automatically from said operational configuration to said non-operational configuration when said motor vehicle (1) is stationary in said primary recharging station (10),
- a fourth phase, wherein said user removes said tank (4) and replaces it with another of said tanks (4) comprised in said distributor of said primary recharging station (10).
